# FASCICULE DE BREVET EUROPEEN

(11) **EP 2 745 800 B1**
(45) Date de publication et mention de la délivrance du brevet: **26.09.2018**
(21) Numéro de dépôt: 13197687.0
(22) Date de dépôt: 17.12.2013
(51) Int. Cl.: A61C 8/00

(54) **Dispositif de conditionnement d'un implant dentaire**
Verpackungsvorrichtung eines Zahnimplantats
Packaging device for a dental implant

(30) Priorité: 19.12.2012 FR 1262360
(43) Date de publication de la demande: 25.06.2014
(73) Titulaire: ANTHOGYR, 74700 Sallanches (FR)
(72) Inventeur: Richard, Hervé, 73590 NOTRE DAME DE BELLECOMBE (FR)
(74) Mandataire: Cabinet Poncet

(56) Documents cités:
- EP-A1- 2 233 109
- EP-A1- 2 279 710
- EP-A1- 2 377 489
- WO-A1-2009/147166
- US-A1- 2007 181 446

## Description

La présente invention concerne le domaine de l'implantologie dentaire, et concerne plus particulièrement un dispositif de conditionnement d'un implant dentaire.

Un implant dentaire est destiné à être vissé dans l'os de la mâchoire du patient et se présente sous une forme générale d'un cylindre fileté extérieurement, muni à son extrémité supérieure d'une cavité de connexion destinée à recevoir une prothèse dentaire ou un élément intermédiaire pour le support d'une prothèse dentaire.

Après extraction d'une dent, le praticien alèse l'alvéole dentaire laissée vide dans la mâchoire du patient, alvéole dentaire dans laquelle est destiné à être mis en place l'implant dentaire par vissage. La géométrie de l'alvéole dentaire n'est jamais parfaite, de sorte que le praticien peut être amené à effectuer plusieurs essais de vissage de l'implant et à adapter si besoin est la forme de l'alvéole dentaire en procédant à des alésages successifs. Entre deux alésages successifs, le praticien est obligé de remettre provisoirement dans son conditionnement l'implant dentaire dont il a infructueusement tenté un vissage, afin de procéder à une correction de l'alvéole dentaire.

Plusieurs conditionnements existants d'un implant dentaire permettent une remise en place de l'implant dans son conditionnement, tel que celui décrit dans le document US 2011/0056851 A1. Dans ce document, l'implant dentaire est tenu via une pièce intermédiaire emmanchée dans la cavité de connexion de l'implant. Cette pièce intermédiaire est généralement appelée porte-implant. Ce porte-implant permet la préhension et la remise en place de l'implant dans son conditionnement sans que le praticien n'ait à toucher l'implant avec ses mains, ce qui permet de garantir des conditions sanitaires satisfaisantes. L'utilisation d'un porte-implant présente cependant plusieurs inconvénients. Tout d'abord, il s'agit d'une pièce intermédiaire destinée à être jetée par la suite et qui augmente donc inutilement le coût de fabrication et de vente de l'implant. En outre, l'utilisation d'un porte-implant engagé dans la cavité de connexion d'un implant augmente sensiblement l'encombrement axial par rapport à la solution qui consiste à engager directement dans la cavité de connexion de l'implant un outil de transport et de vissage. L'augmentation de l'encombrement axial est particulièrement critique lorsqu'il s'agit d'un implant destiné au remplacement d'une dent du fond de la mâchoire du patient. L'utilisation d'un porte-implant allonge également le temps opératoire car il faut procéder à son démontage en le retirant de la cavité de connexion de l'implant après que ce dernier ait été vissé dans la mâchoire du patient. Enfin, le porte-implant cachant généralement le sommet de l'implant, le praticien a une médiocre visibilité du niveau d'enfouissement de l'implant lors de son vissage dans la mâchoire du patient.

Il est donc souhaitable de se passer d'un porte-implant et de manipuler l'implant à l'aide d'un unique outil de transport-vissage s'engageant directement dans la cavité de connexion de l'implant.

Le document US 2005/0023166 A1 décrit un conditionnement d'implant dentaire dans lequel l'implant dentaire est conditionné sans porte-implant. Lors de l'ouverture du conditionnement, la cavité de connexion de l'implant est orientée de façon à être accessible pour l'engagement d'un outil de transport-vissage. Toutefois, dans ce document, il n'est pas prévu de pouvoir remettre en place l'implant dans le dispositif de conditionnement. En effet, pour remettre l'implant dans son conditionnement, il est nécessaire d'effectuer un mouvement de séparation relative en effectuant une traction entre l'outil de transport-vissage d'une part et l'implant d'autre part. Dans le cas du dispositif de conditionnement décrit dans le document US 2005/0023166 A1, le praticien est obligé d'effectuer la séparation de l'implant et de l'outil de transport-vissage en tenant d'une première main l'outil de transport-vissage (par l'intermédiaire de sa pièce à main dentaire) et en tenant d'une deuxième main l'implant dentaire. Une telle solution n'est pas satisfaisante du point de vue sanitaire.

Le document US 2007/0181446 A1 décrit un dispositif de conditionnement pour implant, à tube extérieur rigide creux dans lequel est inséré un manchon muni de bras de préhension d'un implant. Le manchon est monté rotatif dans le tube creux. Selon la position en rotation du manchon dans le tube creux, les bras sont plus ou moins éloignés pour venir enserrer ou libérer un implant dentaire. Pour bien fonctionner, ce dispositif de conditionnement nécessite un tube extérieur parfaitement rigide, sans quoi la position relative des bras de préhension, et donc la tenue de l'implant, serait incertaine. La préhension et la libération de l'implant ne sont pas aisément sélectionnables par le praticien pour autoriser une remise en place facile d'un implant dans le dispositif de conditionnement sans avoir à toucher l'implant à la main et sans utiliser de porte-implant.

Le document EP 2 279 710 A1 décrit un dispositif de conditionnement selon le préambule de la revendication 1. Ce dispositif de conditionnement comporte des ailettes intérieures à partie d'extrémité libre déformable pour venir enserrer un implant dentaire. Seule l'extrémité libre des ailettes est déformable élastiquement. Pour que les ailettes retiennent correctement l'implant dentaire, la paroi latérale périphérique doit être parfaitement rigide, sans quoi la position relative des extrémités libres des ailettes, et donc la tenue de l'implant, serait incertaine. Le praticien ne peut pas sélectivement choisir de retenir ou de libérer un implant dentaire dans le dispositif de conditionnement pour autoriser une remise en place facile d'un implant dans le dispositif de conditionnement sans avoir à toucher l'implant à la main et sans utiliser de porte-implant.

Un problème proposé par la présente invention est de concevoir un dispositif de conditionnement d'un implant dentaire qui autorise une remise en place facile d'un implant dans ledit dispositif de conditionnement, et ce dans de bonnes conditions sanitaires, sans avoir à toucher l'implant à la main et sans utiliser de porte-implant.

Pour atteindre ces objets, ainsi que d'autres, l'invention propose un dispositif de conditionnement d'un implant dentaire, comprenant :
- un tube creux ayant une paroi latérale périphérique, une paroi de fond et une face d'ouverture, définissant un logement interne,
- un capuchon destiné à obturer la face d'ouverture du tube,
- des premiers moyens de butée axiale d'implant dans le logement interne,
- des premiers et deuxièmes moyens de tenue latérale d'implant, respectivement fixés à deux premières parties latérales opposées de la paroi latérale périphérique, dans lequel au moins une de ces deux premières parties latérales est déplaçable entre une première position, dans laquelle les premiers et deuxièmes moyens de tenue latérale d'implant sont situés à une première distance les uns des autres, et une deuxième position, dans laquelle les premiers et deuxièmes moyens de tenue latérale d'implant sont situés à une deuxième distance les uns des autres, la deuxième distance étant inférieure à la première distance.

Pour séparer l'implant de l'outil de transport-vissage, après introduction de l'implant dentaire dans le logement interne du tube creux (l'implant dentaire étant emmanché sur l'outil de transport-vissage), le praticien procède à un déplacement des deux premières parties latérales depuis leur première position vers leur deuxième position pour faire porter les premiers et deuxièmes moyens de tenue latérale d'implant contre l'implant dentaire de façon à le serrer radialement. Le praticien peut alors exercer une force de séparation en tirant axialement sur l'outil de transport-vissage, l'implant étant retenu par pincement dans le tube creux du dispositif de conditionnement. Lors d'une telle opération, le praticien ne touche pas l'implant avec ses mains.

Avantageusement, la paroi latérale périphérique peut être continue, de sorte que l'obturation de la face d'ouverture définit un logement interne fermé. Une paroi latérale périphérique continue limite efficacement les risques de contamination de l'implant une fois que celui-ci a été remis en place dans son conditionnement.

De préférence, on peut prévoir que :
- les deux premières parties latérales opposées présentent une première rigidité,
- la paroi latérale périphérique comporte des deuxièmes parties latérales présentant une deuxième rigidité inférieure à la première rigidité, conformées et disposées de façon à autoriser un mouvement de rapprochement et/ou d'éloignement relatif des deux premières parties latérales l'une par rapport à l'autre.

Les deuxièmes parties latérales autorisent ainsi un mouvement relatif de rapprochement et/ou d'écartement des premières parties latérales, et ce même si la paroi latérale périphérique est continue.

Avantageusement, le dispositif de conditionnement peut comporter des moyens de rappel élastiques des deux premières parties latérales en première position.

Le praticien n'a alors qu'à presser les deux premières parties latérales l'une vers l'autre en exerçant une force de rapprochement par un pincement entre son pouce et son index pour amener les deux premières parties latérales en deuxième position. Le retour en première position est automatique après relâchement de son effort de pincement par le praticien. Le praticien utilise ainsi une seule de ses mains pour manier le dispositif de conditionnement, l'autre étant occupée à tenir la pièce à main dentaire portant l'outil de transport-vissage.

Avantageusement, la paroi de fond et les deux premières parties latérales peuvent être formées d'une seule pièce. Il est ainsi facilement fabriqué une « pince » monobloc incorporant les moyens de rappel élastiques des deux premières parties latérales en première position.

Avantageusement, le dispositif de conditionnement peut comporter des moyens d'emboîtement entre les premières et deuxièmes parties latérales pour obtenir, après emboîtement, une paroi latérale périphérique continue. Un emboîtement est une liaison fiable permettant d'assurer une étanchéité satisfaisante entre le logement interne et l'extérieur du dispositif de conditionnement.

En pratique, les premières ou deuxièmes parties latérales peuvent comporter une rainure d'emboîtement, tandis que les autres des premières ou deuxièmes parties latérales comportent une nervure d'emboîtement.

Avantageusement, les deuxièmes parties latérales peuvent se présenter sous forme de langues solidaires d'une bague destinée à venir recouvrir latéralement des extrémités libres supérieures des premières parties latérales. Les langues viennent obturer l'espace entre deux premières parties latérales et forment les deuxièmes parties latérales flexibles, tandis que la bague limite l'écartement entre les premières parties latérales et définit donc la première distance de la première position des premières parties latérales. Enfin, la bague permet de recevoir le capuchon par emmanchement, lequel emmanchement peut présenter une certaine force de friction assurant une retenue satisfaisante du capuchon.

De préférence, on peut prévoir que :
- les premiers moyens de butée axiale d'implant comportent une plaque d'appui,
- le dispositif de conditionnement comporte des moyens de réception de ladite plaque d'appui, conformés et disposés de façon à recevoir la plaque d'appui à différentes distances de la face d'ouverture.

Un même dispositif de conditionnement peut ainsi recevoir des implants de longueurs très différentes.

En pratique, les moyens de réception peuvent comporter une pluralité de crans de réception disposés sur les faces internes des premières parties latérales.

Avantageusement, le capuchon peut obturer la face d'ouverture par engagement en force sur le tube creux, et, lorsqu'il obture le tube creux, le capuchon peut présenter un débord latéral par rapport à la paroi latérale périphérique du tube creux.

Une telle liaison du capuchon sur le tube creux et une telle conformation du capuchon permettent une ouverture du dispositif de conditionnement par le praticien à l'aide d'une seule de ses mains. En particulier, il suffit au praticien de tenir le dispositif de conditionnement dans sa main et d'exercer avec son seul pouce une poussée sur le débord latéral du capuchon pour le séparer du tube creux.

De préférence, l'une au moins des premières parties latérales peut comporter une rainure externe disposée en correspondance du débord latéral du capuchon. Cette rainure externe permet une préhension intuitive du dispositif de conditionnement dans une main, le praticien étant certain de sa bonne préhension lorsque son pouce est engagé dans la rainure externe. La rainure externe sert ensuite de rainure de guidage dans laquelle le praticien déplace son pouce pour venir appuyer sur le débord latéral du capuchon afin de le séparer du tube creux.

Avantageusement, le capuchon peut être dimensionné de sorte que, lorsqu'il obture la face d'ouverture du tube creux, le capuchon maintient les premiers et deuxièmes moyens de tenue latérale d'implant à une distance inférieure à la première distance, de préférence égale à la deuxième distance.

Le capuchon est ainsi engagé légèrement en force sur le tube creux, ce qui limite efficacement les risques de perte accidentelle du capuchon.

De préférence, le capuchon peut comporter, sur sa face inférieure interne, des deuxièmes moyens de butée axiale conformés et disposés de façon à s'opposer à un échappement de l'implant hors des moyens de tenue latérale.

L'implant dentaire est ainsi maintenu pendant son transport de façon fiable entre les premiers et deuxièmes moyens de butée axiale et les premiers et deuxièmes moyens de tenue latérale.

Avantageusement, les premiers et deuxièmes moyens de butée axiale ainsi que les premiers et deuxièmes moyens de tenue latérale sont en un matériau biocompatible.

On évite ainsi de polluer l'implant avec un matériau qui pourrait risquer de provoquer une nécrose de l'os après vissage de l'implant dans la mâchoire du patient. Il est particulièrement judicieux d'utiliser un matériau qui n'affecte pas l'implant (par oxydation par exemple). Pour ce faire, on pourra prévoir des premiers et deuxièmes moyens de butée axiale et des premiers et deuxièmes moyens de tenue latérale fabriqués dans le même matériau que celui de l'implant dentaire, par exemple en titane.

Avantageusement, le capuchon peut comporter, sur sa face inférieure interne, un logement de réception destiné à recevoir une vis d'obturation de la cavité de connexion d'un implant.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un dispositif de conditionnement selon un mode de réalisation particulier de l'invention, en position ouverte ;
- la figure 2 est une vue en coupe du dispositif de conditionnement de la figure 1, avec son capuchon situé en correspondance et à l'écart de la face d'ouverture du tube creux ;
- la figure 3 est vue en coupe de l'implant de la figure 2, avec le capuchon obturant le tube creux ;
- la figure 4 est une vue en perspective éclatée du dispositif de conditionnement des figures 1 à 3 ;
- la figure 5 est une vue en perspective d'un outil de transport-vissage ; et
- la figure 6 est une vue de côté d'une vis d'obturation de la cavité de connexion d'un implant et de son outil de vissage.

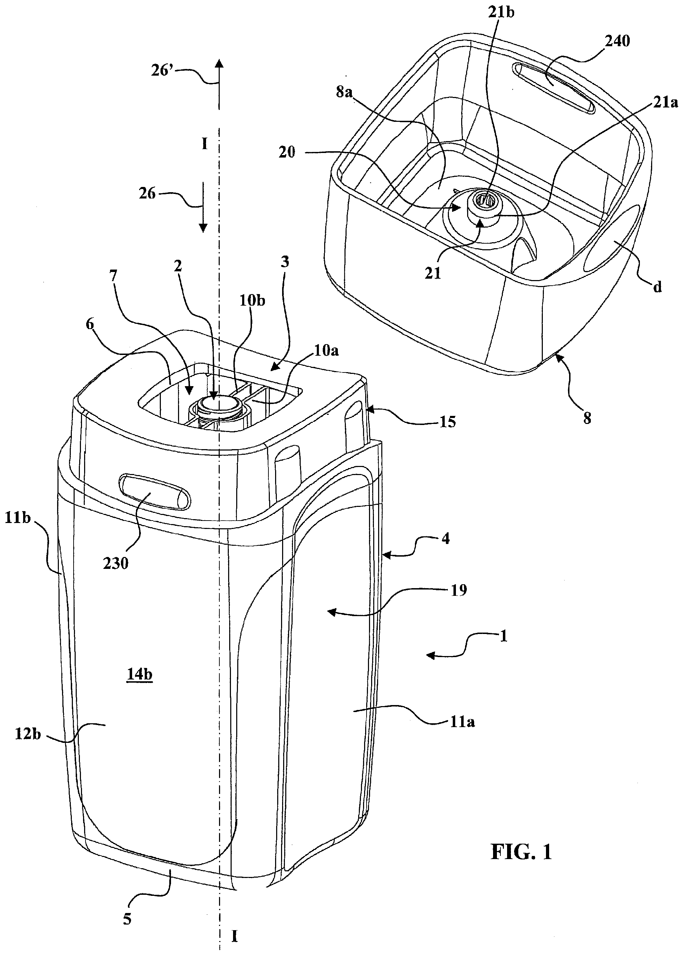

Sur les figures 1 à 4 est illustré un mode de réalisation particulier d'un dispositif de conditionnement 1 selon l'invention d'un implant dentaire 2.

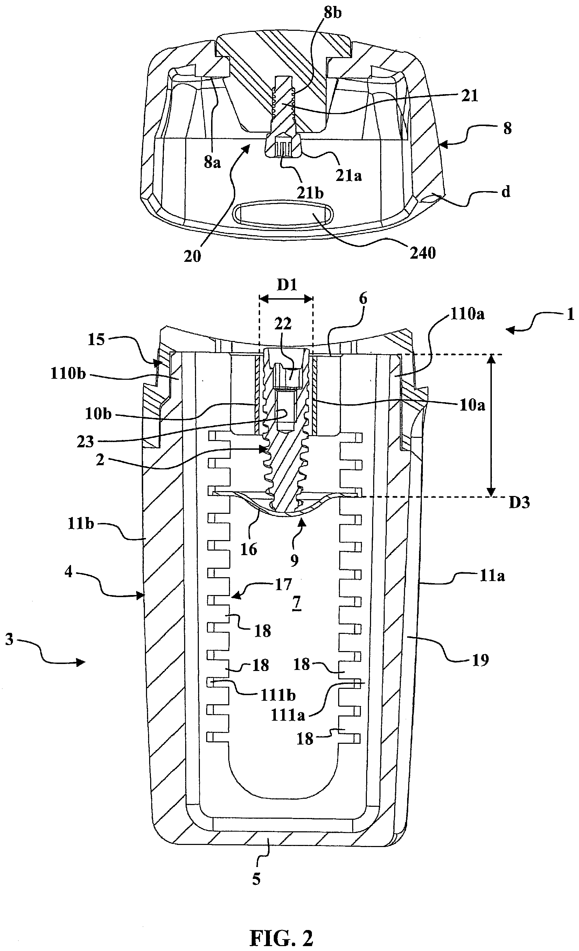

Le dispositif de conditionnement 1 comporte un tube 3 creux comprenant une paroi latérale périphérique 4, une paroi de fond 5 et une face d'ouverture 6, définissant un logement interne 7. Le dispositif de conditionnement 1 comprend également un capuchon 8 destiné à obturer la face d'ouverture 6 du tube 3. Sur les figures 2 à 4, on voit que le dispositif de conditionnement 1 comprend également des premiers moyens de butée axiale 9 d'implant 2 dans le logement interne 7.

Des premiers et deuxièmes moyens de tenue latérale 10a et 10b d'implant 2 sont respectivement fixés à deux premières parties latérales 11a et 11b opposées de la paroi latérale périphérique 4.

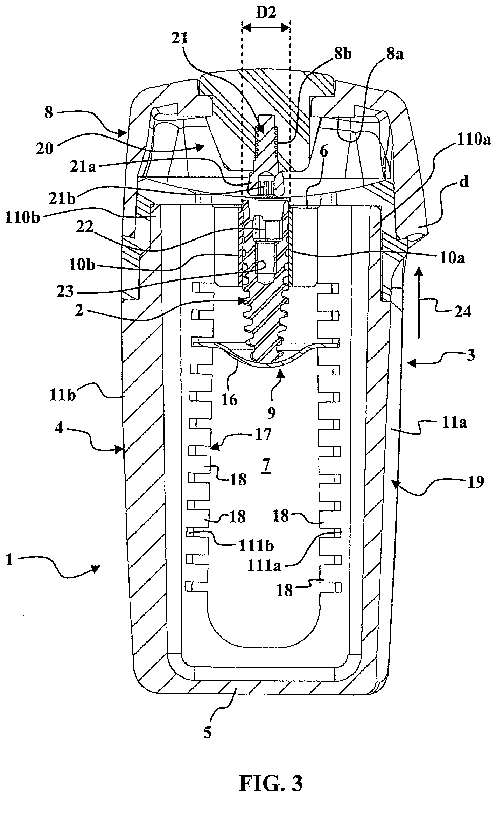

Comme plus particulièrement illustré sur les figures 2 et 3, les premières parties latérales 11a et 11b sont déplaçables entre une première position (figure 2), dans laquelle les premiers et deuxièmes moyens de tenue latérale 10a et 10b d'implant 2 sont situés à une première distance D1 les uns des autres, et une deuxième position (figure 3), dans laquelle les premiers et deuxièmes moyens de tenue latérale 10a et 10b d'implant 2 sont situés à une deuxième distance D2 les uns des autres, la deuxième distance D2 étant inférieure à la première distance D1.

On voit plus particulièrement sur la figure 1 que la paroi latérale périphérique 4 est continue, de sorte que l'obturation de la face d'ouverture 6 définit un logement interne 7 fermé. Pour ce faire, les premières parties latérales 11a et 11b sont reliées entre elles par des deuxièmes parties latérales 12a et 12b.

Pour faciliter le mouvement d'écartement et/ou de rapprochement des premières parties latérales 11a et 11b, on prévoit que :
- les deux premières parties latérales 11a et 11b opposées de la paroi latérale périphérique 4 présentent une première rigidité,
- les deuxièmes parties latérales 12a et 12b de la paroi latérale périphérique 4 présentent une deuxième rigidité inférieure à la première rigidité, et sont conformées et disposées de façon à autoriser un mouvement de rapprochement et/ou d'éloignement des deux premières parties latérales 11a et 11b.

En l'espèce, le dispositif de conditionnement 1 présente une section transversale de forme générale carrée au moyen de deux premières parties latérales 11a et 11b reliées entre elles, de part et d'autre du logement interne 7, par les deuxièmes parties latérales 12a et 12b.

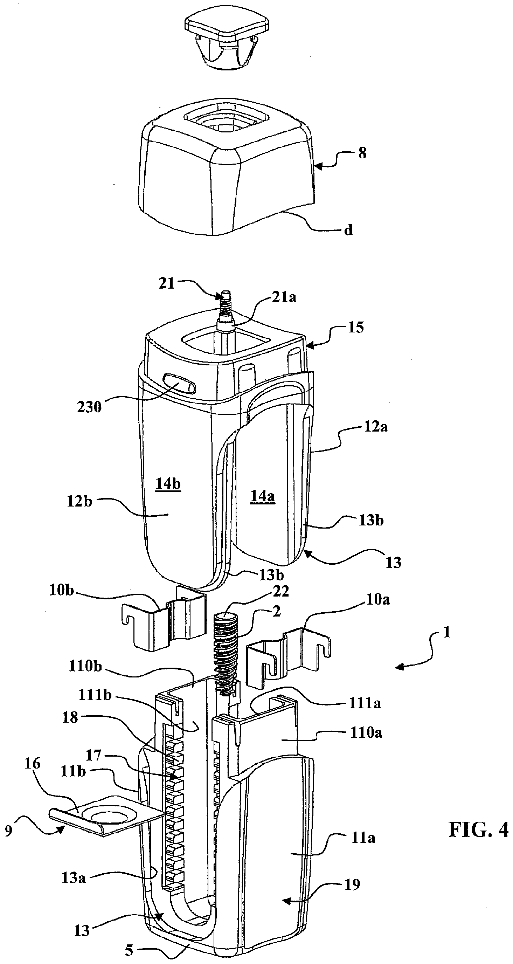

On voit plus particulièrement sur la figure 4 que la paroi de fond 5 et les deux premières parties latérales 11a et 11b sont fabriquées d'une seule pièce, ladite pièce présentant une forme générale de pince en U dont les deux branches parallèles (ici les deux premières parties latérales 11a et 11b) sont élastiquement rappelées en première position. Cette capacité de rappel élastique l'un à l'écart de l'autre et/ou l'un vers l'autre est procurée par une fabrication de la paroi de fond 5 et des deux premières parties latérales 11a et 11b en un matériau adapté tel qu'un matériau plastique, notamment un matériau copolymère par exemple.

Toujours sur la figure 4, on voit que le dispositif de conditionnement 1 comporte des moyens d'emboîtement 13 entre d'une part les premières parties latérales 11a, 11b et d'autre part les deuxièmes parties latérales 12a et 12b pour obtenir, après emboîtement, une paroi latérale périphérique 4 continue. En l'espèce, les premières parties latérales 11a et 11b comportent une rainure d'emboîtement 13a tandis que les deuxièmes parties latérales 12a et 12b comportent des nervures d'emboîtement 13b.

Les deuxièmes parties latérales 12a et 12b se présentent sous forme de langues 14a et 14b solidaires d'une bague 15 destinée à venir recouvrir latéralement les extrémités libres supérieures 110a et 110b des premières parties latérales 11a et 11b.

Les premiers moyens de butée axiale 9 d'implant 2 sont plus particulièrement visibles sur les figures 2 à 4. Ceux-ci comportent une plaque d'appui 16, et le dispositif de conditionnement 1 comporte des moyens de réception 17 de ladite plaque d'appui 16, conformés et disposés de façon à recevoir la plaque d'appui 16 à différentes distances D3 de la face d'ouverture 6. En l'espèce, les moyens de réception 17 comportent une pluralité de crans de réception 18 disposés sur les faces internes 111a et 111b des premières parties latérales 11a et 11b.

On voit plus particulièrement sur la figure 3 que le capuchon 8 obture la face d'ouverture 6 par un engagement en légère force sur le tube 3 creux. En l'espèce, un simple emmanchement suffit. Le capuchon 8 présente, lorsqu'il obture le tube 3 creux, un débord latéral d par rapport à la paroi latérale périphérique 4 du tube 3 creux. En l'espèce, le débord latéral d fait saillie vers l'extérieur par rapport à la première partie latérale 11a.

La première partie latérale 11a comporte par ailleurs une rainure externe 19 disposée en correspondance du débord latéral d du capuchon 8.

Par comparaison entre les figures 2 et 3, on voit que :
- lorsque le capuchon 8 n'obture pas le tube 3 creux, les premières parties latérales 11a et 11b sont élastiquement rappelées en première position,
- lorsque le capuchon 8 obture le tube 3 creux, celui-ci rapproche les premières parties latérales 11a et 11b de façon que les premiers et deuxièmes moyens de tenue latérale 10a et 10b se situent à une distance inférieure à la première distance.

En l'espèce, sur la figure 3, le capuchon 8 maintient les premiers et deuxièmes moyens de tenue latérale 10a et 10b d'implant 2 à une deuxième distance D2 qui permet de serrer l'implant 2 entre les premiers et deuxièmes moyens de tenue latérale 10a et 10b.

Pour autoriser des mouvements de rapprochements et/ou éloignements des premières parties latérales 11a et 11b, les deuxièmes parties latérales 12a et 12b sont fabriquées en un matériau élastique souple, tel qu'en un matériau élastomère par exemple.

On voit plus particulièrement sur les figures 1 à 3 que le capuchon 8 comporte, sur sa face inférieure interne 8a, des deuxièmes moyens de butée axiale 20 conformés et disposés de façon à s'opposer à un échappement de l'implant 2 hors des moyens de tenu latérale 10a et 10b. Pour ce faire, le capuchon 8 comporte, sur sa face inférieure interne 8a, un logement de réception 8b destiné à recevoir une vis d'obturation 21 de la cavité de connexion 22 de l'implant 2.

La vis d'obturation 21 est destinée à venir se visser dans la cavité de connexion 22 par coopération avec le filetage intérieur 23. Lorsque la vis d'obturation 21 est vissée dans le filetage intérieur 23, la tête 21a de la vis d'obturation 21 vient obturer de façon étanche la cavité de connexion 22 de l'implant 2.

Pour éviter toute incompatibilité entre les matériaux pouvant conduire à une dégradation (par oxydation par exemple), il est prévu de réaliser l'implant 2, la vis d'obturation 21, la plaque d'appui 16, les moyens de tenue latérale 10a et 10b en un seul et même matériau biocompatible, tel que du titane par exemple.

L'utilisation du dispositif de conditionnement 1 selon l'invention va désormais être expliquée plus en détails.

A l'état initial, le dispositif de conditionnement 1 se présente comme illustré sur la figure 3 où le capuchon 8 obture la face d'ouverture 6 du tube 3. L'implant dentaire 2 est contenu dans le logement interne 7 en étant latéralement retenu entre les premiers et deuxièmes moyens de tenue latérale 10a et 10b et en étant tenus axialement entre les premiers et deuxièmes moyens de butée axiale 9 et 20. A cet effet, le capuchon 8 est emmanché sur la bague 15 qui, étant en un matériau souple à base élastomère, retient le capuchon 8 par une certaine friction. Dans le cas présent, il est également prévu des excroissances 230 sur la bague 15 (figures 1 et 4), destinées à pénétrer dans des renfoncements 240 prévus dans le capuchon 8. L'implant 2 repose sur la plaque d'appui 16, et la tête 21a de la vis d'obturation 21 vient à proximité immédiate de, voire porte en appui contre, l'implant 2. L'implant 2 est ainsi maintenu dans le logement interne 7 avec de très faibles degrés de liberté.

Après que le praticien ait réalisé par forages successifs un trou dans la mâchoire du patient à l'aide de forets montés sur une pièce à main dentaire, celui-ci saisit le dispositif de conditionnement 1 à l'aide d'une seule main, engage le pouce dans la rainure externe 19, puis déplace celui-ci selon un mouvement illustré par la flèche 24 jusqu'à venir en butée contre le débord latéral d pour appliquer une force visant à séparer le capuchon 8 du tube 3 creux. Lors de l'application de cette force, le capuchon 8, qui est simplement emmanché sur le tube 3, se sépare du tube 3 comme illustré sur la figure 2, et le praticien le fait alors tomber sur un champ stérile afin de préserver une bonne stérilité du capuchon 8 et de la vis d'obturation 21.

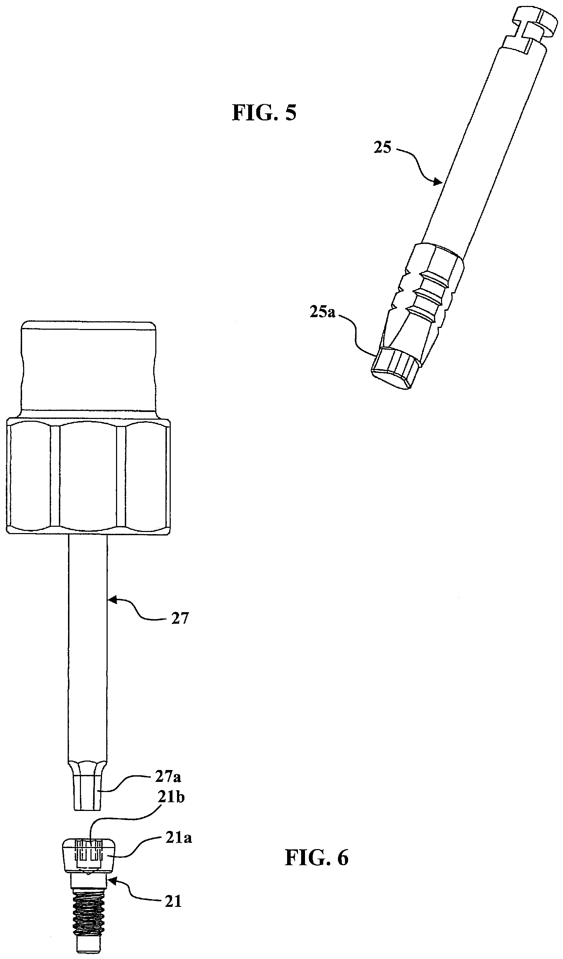

Avec son autre main, le praticien saisit une pièce à main dentaire dont le mandrin porte un outil de transport-vissage 25 tel qu'illustré sur la figure 5. L'outil de transport-vissage 25 comporte une extrémité distale 25a conformée et dimensionnée pour s'engager par emmanchement avec un léger effort dans la cavité de connexion 22 de l'implant 2. Pour ce faire, le praticien tient le dispositif de conditionnement 1 comme illustré sur la figure 1 avec la face d'ouverture 6 dirigée vers le haut, et fait ensuite pénétrer l'outil de transport-vissage 25 selon son extrémité distale 25a dans la cavité de connexion 22, selon un mouvement de translation illustré par la flèche 26.

Après avoir emmanché l'outil de transport-vissage 25 dans l'implant 2, le praticien peut retirer l'outil à main à l'écart du dispositif de conditionnement 1 selon la direction axiale I-I : l'implant, solidaire de l'outil de transport-vissage 25, sort alors du dispositif de conditionnement 1 selon un mouvement de translation illustré par la flèche 26'. Les premiers et deuxièmes moyens de tenue latérale 10a et 10b sont en première position (figure 2) et ne s'opposent donc pas à l'extraction de l'implant 2 hors du dispositif de conditionnement 1. Le praticien tente ensuite un vissage dans l'alvéole dentaire alésée dans la mâchoire du patient.

Dans le cas où le praticien ne parvient pas à visser de façon satisfaisante l'implant dans l'alvéole dentaire, celui-ci peut réintroduire temporairement l'implant 2 dans le dispositif de conditionnement 1 selon le mouvement de translation illustré par la flèche 26. Le praticien serre alors entre ses doigts le dispositif de conditionnement 1 de façon à déplacer les deux premières parties latérales 11a et 11b en deuxième position. Les premiers et deuxièmes moyens de tenue latérale 10a et 10b viennent alors serrer radialement l'implant 2 et le praticien peut alors effectuer une légère traction sur l'outil de transport-vissage 25 afin de rompre la liaison temporaire par emmanchement entre l'outil de transport-vissage 25 et l'implant 2. Le praticien peut ensuite remettre le capuchon 8 sur le dispositif de conditionnement 1 avant de laisser celui-ci reposer sur un champ stérile.

Le praticien procède à un nouvel alésage de l'alvéole dentaire à l'aide d'un foret, puis, ré-exécute les opérations de connexion de l'outil de transport-vissage 25 à l'implant 2 et de vissage de l'implant dans l'alvéole dentaire dont la géométrie a été corrigée par ré-alésage.

Lors du vissage de l'implant 2 dans la mâchoire du patient, la partie supérieure de l'implant, au voisinage de la cavité de connexion 22, reste visible pour que le praticien contrôle visuellement de façon satisfaisante le niveau d'enfouissement de l'implant 2. Une fois l'implant 2 vissé dans l'alvéole dentaire et retenu dans cette dernière par son filetage extérieur, le praticien applique une traction de l'outil de transport-vissage 25 à l'écart de l'implant 2 pour rompre la liaison temporaire par emmanchement entre ces deux éléments.

Le praticien procède ensuite à l'obturation de la cavité de connexion 22 de l'implant 2. Pour ce faire, il utilise un outil de vissage 27 (figure 6) qu'il engage dans l'empreinte 21b de la vis d'obturation 21 encore contenue dans le logement de réception 8b. L'extrémité distale 27a de l'outil de vissage présente une légère conicité de façon à s'emmancher avec un léger coincement dans l'empreinte 21b. Le praticien retire alors l'outil de vissage 27 à l'écart du capuchon 8, ce qui a pour effet d'extraire la vis d'obturation 21 hors du logement de réception 8b. Enfin, le praticien introduit la vis d'obturation 21 dans la cavité de connexion 22 de l'implant 2 et visse celle-ci dans le filetage intérieur 23 jusqu'à obturation parfaite de la cavité de connexion 22. A la fin du vissage de la vis d'obturation 21, le praticien retire l'outil de vissage 27 à l'écart de la vis d'obturation 21 pour déconnecter l'outil de vissage de l'empreinte 21b. La vis d'obturation 21 empêche ainsi la pénétration d'éléments étrangers dans la cavité de connexion 22 pendant la phase d'ostéo-intégration de l'implant 2 dans la mâchoire du patient.

De bons résultats ont été obtenus par une fabrication des premières parties latérales 11a et 11b en un matériau copolymère, et notamment dans le matériau fabriqué et vendu par la société EASTMAN sous la dénomination EASTER COPOLYMERE MM211.

De bons résultats ont été obtenus en fabriquant les deuxièmes parties latérales 12a et 12b en un matériau élastomère fabriqué et vendu par la société KRAIBURG TPE GmbH & Co. KG sous la dénomination TM4MED.

## Revendications

1. Dispositif de conditionnement (1) d'un implant dentaire (2), comprenant :
- un tube (3) creux ayant une paroi latérale périphérique (4), une paroi de fond (5) et une face d'ouverture (6), définissant un logement interne (7),
- un capuchon (8) destiné à obturer la face d'ouverture (6) du tube (3),
- des premiers moyens de butée axiale (9) d'implant (2) dans le logement interne (7),
- des premiers (10a) et deuxièmes (10b) moyens de tenue latérale d'implant (2), respectivement fixés à deux premières parties latérales (11a, 11b) opposées de la paroi latérale périphérique (4),
**caractérisé en ce qu'**au moins une de ces deux premières parties latérales (11a, 11b) est déplaçable entre une première position, dans laquelle les premiers (10a) et deuxièmes (10b) moyens de tenue latérale d'implant (2) sont situés à une première distance (D1) les uns des autres, et une deuxième position, dans laquelle les premiers (10a) et deuxièmes (10b) moyens de tenue latérale d'implant (2) sont situés à une deuxième distance (D2) les uns des autres, la deuxième distance (D2) étant inférieure à la première distance (D1).

2. Dispositif de conditionnement (1) selon la revendication 1, **caractérisé en ce que** la paroi latérale périphérique (4) est continue, de sorte que l'obturation de la face d'ouverture (6) définit un logement interne (7) fermé.

3. Dispositif de conditionnement (1) selon l'une des revendications 1 ou 2, **caractérisé en ce que** :
- les deux premières parties latérales (11a, 11b) opposées présentent une première rigidité,
- la paroi latérale périphérique (4) comporte des deuxièmes parties latérales (12a, 12b) présentant une deuxième rigidité inférieure à la première rigidité, conformées et disposées de façon à autoriser un mouvement de rapprochement et/ou d'éloignement relatif des deux premières parties latérales (11a, 11b) l'une par rapport à l'autre.

4. Dispositif de conditionnement (1) selon l'une quelconque des revendications 1 à 3, **caractérisé en ce qu'**il comporte des moyens de rappel élastiques des deux premières parties latérales (11a, 11b) en première position.

5. Dispositif de conditionnement (1) selon l'une quelconque des revendications 1 à 4, **caractérisé en ce que** la paroi de fond (5) et les deux premières parties latérales (11a, 11b) sont formées d'une seule pièce.

6. Dispositif de conditionnement (1) selon la revendication 5, **caractérisé en ce qu'**il comporte des moyens d'emboîtement (13) entre les premières et deuxièmes parties latérales (11a, 11b, 12a, 12b) pour obtenir, après emboîtement, une paroi latérale périphérique (4) continue.

7. Dispositif de conditionnement (1) selon la revendication 6, **caractérisé en ce que** les premières ou deuxièmes parties latérales (11a, 11b, 12a, 12b) comportent une rainure d'emboîtement (13a), tandis que les autres des premières ou deuxièmes parties latérales (11a, 11b, 12a, 12b) comportent une nervure d'emboîtement (13b).

8. Dispositif de conditionnement (1) selon l'une quelconque des revendications 1 à 7, **caractérisé en ce que** les deuxièmes parties latérales (12a, 12b) se présentent sous forme de langues (14a, 14b) solidaires d'une bague (15) destinée à venir recouvrir latéralement des extrémités libres supérieures (110a, 110b) des premières parties latérales (11a, 11b).

9. Dispositif de conditionnement (1) selon l'une quelconque des revendications 1 à 8, **caractérisé en ce que** :
- les premiers moyens de butée axiale (9) d'implant (2) comportent une plaque d'appui (16),
- le dispositif de conditionnement (1) comporte des moyens de réception (17) de ladite plaque d'appui (16), conformés et disposés de façon à recevoir la plaque d'appui (16) à différentes distances (D3) de la face d'ouverture (6).

10. Dispositif de conditionnement (1) selon la revendication 9, **caractérisé en ce que** les moyens de réception (17) comportent une pluralité de crans de réception (18) disposés sur les faces internes (111a, 111b) des premières parties latérales (11a, 11b).

11. Dispositif de conditionnement (1) selon l'une quelconque des revendications 1 à 10, **caractérisé en ce que** le capuchon (8) obture la face d'ouverture (6) par engagement en force sur le tube (3) creux, et **en ce que**, lorsqu'il obture le tube (3) creux, le capuchon (8) présente un débord latéral (d) par rapport à la paroi latérale périphérique (4) du tube (3) creux.

12. Dispositif de conditionnement (1) selon la revendication 11, **caractérisé en ce que** l'une au moins des premières parties latérales (11a, 11b) comporte une rainure externe (19) disposée en correspondance du débord latéral (d) du capuchon (8).

13. Dispositif de conditionnement (1) selon l'une quelconque des revendications 1 à 12, **caractérisé en ce que**, lorsque le capuchon (8) obture la face d'ouverture (6) du tube (3) creux, le capuchon (8) maintient les premiers (10a) et deuxièmes (10b) moyens de tenue latérale d'implant (2) à une distance inférieure à la première distance (D1), de préférence égale à la deuxième distance (D2).

14. Dispositif de conditionnement (1) selon l'une quelconque des revendications 1 à 13, **caractérisé en ce que** le capuchon (8) comporte, sur sa face inférieure interne (8a), des deuxièmes moyens de butée axiale (20) destinés à coopérer avec les premiers moyens de butée axiale (9) pour tenir axialement l'implant dentaire (2) dans le logement interne (7).

15. Dispositif de conditionnement (1) selon la revendication 14, **caractérisé en ce que** les premiers (9) et deuxièmes (20) moyens de butée axiale ainsi que les premiers (10a) et deuxièmes (10b) moyens de tenue latérale sont en un matériau biocompatible.

16. Dispositif de conditionnement (1) selon l'une quelconque des revendications 1 à 15, **caractérisé en ce que** le capuchon (8) comporte, sur sa face inférieure interne (8a), un logement de réception (8b) destiné à recevoir une vis d'obturation (21) de la cavité de connexion (22) d'un implant (2).

17. Dispositif de conditionnement (1) selon l'une quelconque des revendications 1 à 16, **caractérisé en ce que** les deuxièmes parties latérales (12a, 12b) sont réalisées en un matériau élastomère.

18. Dispositif de conditionnement (1) selon l'une quelconque des revendications 1 à 17, **caractérisé en ce que** les premières parties latérales (11a, 11b) sont réalisées en un matériau copolymère.

## Patentansprüche

1. Verpackungsvorrichtung (1) für ein dentales Implantat (2) umfassend:
- eine hohle Röhre (3) mit einer äußeren Seitenwand (4), einer Bodenwand (5), und einer Öffnungsseite (6), die einen Innenraum (7) definieren,
- einen Deckel (8) zum Verschließen der Öffnungsseite (6) der Röhre (3),
- erste axiale Anlegemittel (9) des Implantats (2) im Innenraum (7),
- erste (10a) und zweite (10b) seitliche Rückhaltemittel des Implantats (2), die entsprechend an zwei sich gegenüberliegenden ersten Seitenteilen (11a, 11b) der äußeren Seitenwand (4) befestigt sind,
**dadurch gekennzeichnet, dass** wenigstens einer der zwei ersten Seitenteile (11a, 11b) zwischen einer ersten Position, in dem die ersten (10a) und zweiten (10b) Rückhaltemittel des Implantats (2) sich in einem ersten Abstand (D1) zueinander befinden und einer zweiten Position, in dem die ersten (10a) und zweiten (10b) Rückhaltemittel des Implantats (2) sich in einem zweiten Abstand (D2) zueinander befinden beweglich sind, wobei der zweite Abstand (D2) kürzer ist, als der erste Abstand (D1).

2. Verpackungsvorrichtung (1) nach Anspruch 1, **dadurch gekennzeichnet, dass** äußere Seitenwand (4) durchgehend ist, so dass durch einen Verschluss der Öffnungsseite (6) eine verschlossener Innenraum (7) gegeben ist.

3. Verpackungsvorrichtung (1) nach einem der Ansprüche 1 oder 2, **dadurch gekennzeichnet, dass**:
- die sich gegenüberliegenden zwei ersten Seitenteile (11a, 11b) eine erste Steifigkeit besitzen,
- die äußere Seitenwand (4) zweite Seitenteile (12a, 12b) besitzt die eine zweite Steifigkeit besitzen, die kleiner als die erste Steifigkeit ist und die derart vorgesehen und eingerichtet sind, den zwei ersten Seitenteilen (11a, 11b) zu ermöglichen sich gegen und/oder entgegen einander zu bewegen.

4. Verpackungsvorrichtung (1) nach einem der Ansprüche 1 bis 3, **dadurch gekennzeichnet, dass** sie elastische Rückstellmittel zum Rückstellen der ersten Seitenteile (11a, 11b) in die erste Position umfasst.

5. Verpackungsvorrichtung (1) nach einem der Ansprüche 1 bis 4, **dadurch gekennzeichnet, dass** die Bodenwand (5) und die zwei ersten Seitenteile (11a, 11b) einstückig ausgebildet sind.

6. Verpackungsvorrichtung (1) nach Anspruch 5, **dadurch gekennzeichnet, dass** sie Mittel zum Ineinandergreifen (13) zwischen dem ersten und zweiten Seitenteilen (11a, 11b, 12a, 12b) umfasst, um nach dem Ineinandergreifen eine durchgehende äußere Seitenwand (4) zu erhalten.

7. Verpackungsvorrichtung (1) nach Anspruch 6, **dadurch gekennzeichnet, dass** die ersten oder zweiten Seitenteile (11a, 11b, 12a, 12b) eine Ineinandergriffsfuge (13a) umfassen, während die andere der ersten oder zweiten Seitenteile (11a, 11b, 12a, 12b) eine Ineinandergriffsrippe (13b) umfassen.

8. Verpackungsvorrichtung (1) nach einem der Ansprüche 1 bis 7, **dadurch gekennzeichnet, dass** die zweiten Seitenteile (12a, 12b) als Zungen (14a, 14b) ausgebildet sind, die mit einem Ring (15) verbunden sind, der vorgesehen ist seitlich freie obere Enden (110a, 110b) der ersten Seitenteile (11a, 11b) zu abzudecken.

9. Verpackungsvorrichtung (1) nach einem der Ansprüche 1 bis 8, **dadurch gekennzeichnet, dass**:
- die ersten axiale Anlegemittel (9) des Implantats (2) eine Stützplatte (16) umfassen,
- die Verpackungsvorrichtung (1) Aufnahmemittel (17) für die genannte Stützplatte (16) umfasst, die derart ausgebildet und vorgesehen sind die Stützplatte (16) in verschiedenen Abständen (D3) der Öffnungsseite (6) aufzunehmen.

10. Verpackungsvorrichtung (1) nach Anspruch 9, **dadurch gekennzeichnet, dass** die Aufnahmemittel (17) eine Vielzahl von Aufnahmeschlitzen (18) umfassen, die über den Innenseiten (111a, 111b) der ersten Seitenteile (11a, 11b) angeordnet sind.

11. Verpackungsvorrichtung (1) nach einem der Ansprüche 1 bis 10, **dadurch gekennzeichnet, dass** der Deckel (8) die Öffnungsseite (6) kraftschlüssig in der hohlen Röhre (3) verschließt, und dass der Deckel (8) beim Verschließen der hohlen Röhre (3) einen seitlichen Überhang (d) bezüglich der äußeren Seitenwand (4) der hohlen Röhre (3) besitzt.

12. Verpackungsvorrichtung (1) nach Anspruch 11, **dadurch gekennzeichnet, dass** wenigstens eines der ersten Seitenteile (11a, 11b) eine Außenfuge (19) besitzt, die ausgerichtet am seitlichen Überhang (d) der hohlen Röhre (3) angeordnet ist.

13. Verpackungsvorrichtung (1) nach einem der Ansprüche 1 bis 12, **dadurch gekennzeichnet, dass** wenn der Deckel (8) die Öffnungsseite (6) der hohlen Röhre (3) verschließt, der Deckel (8) die ersten (10a) und zweiten (10b) seitlichen Rückhaltemittel des Implantats (2) in einem kleineren als den ersten Abstand (D1), der vorzugsweise gleich dem zweiten Abstand (D2) ist.

14. Verpackungsvorrichtung (1) nach einem der vorstehenden Ansprüche 1 bis 13, **dadurch gekennzeichnet, dass** der Deckel (8) über seiner inneren unteren Seite (8a) zweite axiale Anlegemittel (20) umfasst, die vorgesehen sind, mit den ersten axialen Anlegemitteln (9) zusammen zu wirken, um das dentale Implantat (2) im Innenraum (7) axial zu halten.

15. Verpackungsvorrichtung (1) nach Anspruch 14, **dadurch gekennzeichnet, dass** die ersten (9) und zweiten (20) axialen Anlegemittel als auch die ersten (10a) und zweiten (10b) seitlichen Rückhaltemittel aus einem biokompatiblem Material sind.

16. Verpackungsvorrichtung (1) nach einem der Ansprüche 1 bis 15, **dadurch gekennzeichnet, dass** der Deckel (8) auf seiner inneren unteren Seite (8a) eine Innenaufnahme (8b) umfasst, die vorgesehen ist, eine Verschlussschraube (21) der Verbindungskavität (22) eines Implantats (2) aufzunehmen.

17. Verpackungsvorrichtung (1) nach einem der Ansprüche 1 bis 16, **dadurch gekennzeichnet, dass** die zweiten Seitenteile (12a, 12b) aus einem elastischen Material hergestellt sind.

18. Verpackungsvorrichtung (1) nach einem der Ansprüche 1 bis 17, **dadurch gekennzeichnet, dass** die ersten Seitenteile (11a, 11b) aus einem copolymeren Material hergestellt sind.

## Claims

1. Packaging device (1) for a dental implant (2), comprising:
- a hollow tube (3) having a peripheral lateral wall (4), a bottom wall (5) and an opening face (6), which define an internal compartment (7),
- a cap (8) intended to close the opening face (6) of the tube (3),
- first means of axial abutment (9) of the implant (2) in the internal compartment (7),
- first (10a) and second (10b) means of lateral retention of the implant (2), which means are respectively fixed to two mutually opposite first lateral parts (11a, 11b) of the peripheral lateral wall (4),
**characterized in that** at least one of the two first lateral parts (11a, 11b) is movable between a first position, in which the first (10a) and second (10b) means of lateral retention of the implant (2) are situated at a first distance (D1) from each other, and a second position, in which the first (10a) and second (10b) means of lateral retention of the implant (2) are situated at a second distance (D2) from each other, the second distance (D2) being shorter than the first distance (D1).

2. Packaging device (1) according to claim 1, **characterized in that** the peripheral lateral wall (4) is continuous, such that the closure of the opening face (6) defines a closed internal compartment (7).

3. Packaging device (1) according to either of claims 1 and 2, **characterized in that**:
- the two mutually opposite first lateral parts (11a, 11b) have a first rigidity,
- the peripheral lateral wall (4) has second lateral parts (12a, 12b) that have a second rigidity less than the first rigidity and that are designed and arranged in such a way as to allow the two first lateral parts (11a, 11b) to move toward and/or away from each other.

4. Packaging device (1) according to any one of claims 1 to 3, **characterized in that** it has elastic return means for returning the two first lateral parts (11a, 11b) to the first position.

5. Packaging device (1) according to any one of claims 1 to 4, **characterized in that** the bottom wall (5) and the two first lateral parts (11a, 11b) are formed in one piece.

6. Packaging device (1) according to claim 5, **characterized in that** it has means of interlocking (13) between the first and second lateral parts (11a, 11b, 12a, 12b) in order to obtain a continuous peripheral lateral wall (4) after interlocking.

7. Packaging device (1) according to claim 6, **characterized in that** the first or second lateral parts (11a, 11b, 12a, 12b) have an interlocking groove (13a), while the others of the first or second lateral parts (11a, 11b, 12a, 12b) have an interlocking rib (13b).

8. Packaging device (1) according to any one of claims 1 to 7, **characterized in that** the second lateral parts (12a, 12b) are in the form of tongues (14a, 14b) integrally connected to a ring (15), which is intended to laterally cover free upper ends (110a, 110b) of the first lateral parts (11a, 11b).

9. Packaging device (1) according to any one of claims 1 to 8, **characterized in that**:
- the first means of axial abutment (9) of the implant (2) have a support plate (16),
- the packaging device (1) has receiving means (17) for said support plate (16), which receiving means (17) are designed and arranged in such a way as to receive the support plate (16) at different distances (D3) from the opening face (6).

10. Packaging device (1) according to claim 9, **characterized in that** the receiving means (17) have a plurality of receiving notches (18) arranged on the internal faces (111a, 111b) of the first lateral parts (11a, 11b).

11. Packaging device (1) according to any one of claims 1 to 10, **characterized in that** the cap (8) closes the opening face (6) by engaging with force on the hollow tube (3), and **in that** the cap (8), when it closes the hollow tube (3), has a lateral overhang (d) with respect to the peripheral lateral wall (4) of the hollow tube (3) .

12. Packaging device (1) according to claim 11, **characterized in that** at least one of the first lateral parts (11a, 11b) has an external groove (19) arranged in line with the lateral overhang (d) of the cap (8).

13. Packaging device (1) according to any one of claims 1 to 12, **characterized in that**, when the cap (8) closes the opening face (6) of the hollow tube (3), the cap (8) holds the first (10a) and second (10b) means of lateral retention of the implant (2) at a distance shorter than the first distance (D1), and preferably equal to the second distance (D2).

14. Packaging device (1) according to any one of claims 1 to 13, **characterized in that** the cap (8) has, on its internal lower face (8a), second means of axial abutment (20 designed to cooperate with the first means of axial abutment (9) to axially hold the dental implant (2) into the internal compartment (7).

15. Packaging device (1) according to claim 14, **characterized in that** the first (9) and second (20) means of axial abutment and the first (10a) and second (10b) means of lateral retention are made of a biocompatible material.

16. Packaging device (1) according to any one of claims 1 to 15, **characterized in that** the cap (8) has, on its internal lower face (8a), a receiving seat (8b) intended to receive a closure screw (21) for closing the connection cavity (22) of an implant (2).

17. Packaging device (1) according to any one of claims 1 to 16, **characterized in that** the second lateral parts (12a, 12b) are made of an elastomeric material.

18. Packaging device (1) according to any one of claims 1 to 17, **characterized in that** the first lateral parts (11a, 11b) are made of a copolymer material.
